# EUROPEAN PATENT SPECIFICATION

(11) **EP 0 911 893 B1**
(45) Date of publication and mention of the grant of the patent: **05.03.2003**
(21) Application number: 98119869.0
(22) Date of filing: 20.10.1998
(51) Int. Cl.: H01M 4/60, H01M 10/40, H01M 4/02

(54) **Polymer battery**
Polymerbatterie
Batterie à polymère

(30) Priority: 24.10.1997 JP 29259897
(43) Date of publication of application: 28.04.1999
(73) Proprietor: Nec Tokin Corporation, Sendai-shi, Miyagi (JP)
(72) Inventor: Okada, Shinako c/o NEC Corporation, Tokyo (JP); Nishiyama, Toshihiko c/o NEC Corporation, Tokyo (JP); Kurihara, Junko c/o NEC Corporation, Tokyo (JP); Sakata, Koji c/o NEC Corporation, Tokyo (JP); Harada, Gaku c/o NEC Corporation, Tokyo (JP)
(74) Representative: Glawe, Delfs, Moll & Partner

(56) References cited:
- DE-A- 2 240 614
- FR-A- 1 519 729
- FR-A- 2 146 947
- GB-A- 2 134 125
- US-A- 5 002 700
- US-A- 5 538 813
- PATENT ABSTRACTS OF JAPAN vol. 005, no. 034 (E-048), 4 March 1981 & JP 55 161374 A (NEC CORP), 15 December 1980
- PATENT ABSTRACTS OF JAPAN vol. 009, no. 056 (E-302), 12 March 1985 & JP 59 196573 A (SHOWA DENKO KK;OTHERS: 01), 7 November 1984

## Description

### BACKGROUND OF THE INVENTION

### 1. Field of the Invention:

The present invention relates to a polymer battery.

### 2. Description of the Related Art:

Heretofore, as batteries for use in electronic equipment and the like, there have been used Ni-Cd batteries, silver oxide cells, mercury cells, lithium batteries and the like. However, materials for these batteries are harmful heavy metals and rare metals, and they have the problems of environmental pollution and resources. In addition, these materials are not satisfactory in point of an energy density. In order to solve these problems, Japanese Patent Application Laid-open No. 161374/1980 suggests a battery in which an alkaline earth metal is used as a cathode active material and benzoquinone is used as an anode active material.

Furthermore, as a battery in which an organic material is used for an electrode, Japanese Patent Application Laid-open No. 166529/1984 discloses a polymer battery using a polypyrrole or a polypyrrole copolymer. It is described therein that this battery can exert a good reversibility over 200 cycles or more of charge and discharge and the performance of the battery does not deteriorate during this period, and an open circuit voltage scarcely deteriorates over 4 months.

Moreover, Japanese Patent Application Laid-open No. 62451/1991 discloses an electrode for an aqueous soluble system battery which comprises a polyaniline polymer on which an organic dopant having a sulfonic group is immobilized. It is described therein that the movement of a proton which is a counter ion of the immobilized anionic organic dopant is only concerned with a charge-discharge reaction of this battery, and the anionic organic dopant does not move. Therefore, any mechanical stress of a polymer film caused by the movement of the anionic organic dopant is not generated, and as a result, more reversible electrode kinetics, a better chemical stability and a larger energy density can be brought.

In the above-mentioned conventional technique, however, the anionic dopant must be immobilized on the polyaniline polymer, which increases a manufacturing step and hence a manufacturing cost. Similarly to other conventional electrodes, particularly, rapid charge and discharge as well as cycle properties still leave some room for improvement.

### SUMMARY OF THE INVENTION

An object of the present invention is to provide a polymer battery which enables rapid charge and discharge and which is excellent in cycle properties.

The present inventors have intensively investigated with the intention of achieving the above-mentioned object, and as a result, the present invention has now been completed.

That is to say, the first aspect of the present invention is directed to a polymer battery comprising at least a pair of electrodes for carrying out the receipt and release of electrons in accordance with an oxidation-reduction reaction of a compound to take out an electric energy, and an electrolyte, a solid electrolyte or a gel electrolyte, wherein a compound constituting the electrodes is a π-conjugated polymer including a nitrogen atom and/or a quinone compound; the electrolyte, the solid electrolyte or the gel electrolyte contains a proton; and the receipt and release of the electrons in accordance with the oxidation-reduction reaction of the compound are carried out only by the bonding and elimination of the proton bonded to or coordinated with the nitrogen atom or the proton of a produced hydroxyl group under the control of a proton concentration and a working voltage, wherein
at least one of the electrodes is precharged prior to assembly of the polymer battery at a potential different from the electrodes' natural potential to avoid irreversible reactions which would otherwise occur during charging of the polymer battery;
the electrolyte contains a proton source; and
a proton concentration of the electrolyte is set and a working voltage is controlled so that the receipt and release of the electrons in accordance with the oxidation-reduction reaction of the active materials of the positive and negative constituting the electrodes are carried out only by the bonding and elimination of the proton bonded to or coordinated with the nitrogen atom or the proton of a produced hydroxyl group.

The second aspect of the present invention is directed to a method in accordance with claim 10 for charging a polymer battery which comprises the step of controlling a working voltage so that the receipt and release of electrons in accordance with an oxidation-reduction reaction of a compound may be carried out only by the bonding and elimination of a proton bonded to or coordinated with a nitrogen atom or a proton of a produced hydroxyl group.

The polymer battery of the present invention enables rapid charge and discharge and is excellent in cycle properties.

The reason why the rapid charge and discharge is possible is that a proton regarding the present invention has a larger diffusion coefficient in an aqueous solution as compared with a cation of an alkali metal or an alkaline earth metal for use in a conventional battery.

The reason why the excellent cycle properties are obtained is that the proton regarding the present invention has a smaller size as compared with a cation of an alkali metal or an alkaline earth metal, or an anion which can form a salt with the cation; a volume change and a structure change of an electrode active material by the adsorption and desorption of the proton are slight; an anionic dopant scarcely moves under a working voltage regarding the present invention, so that the volume change and the structure change of the electrode active material scarcely occur; and the increase of a contact resistance between an electrode active material and a current collector caused by the volume change of the active material can be inhibited.

### BRIEF DESCRIPTION OF THE DRAWINGS

Fig. 1 is a schematic sectional view of a polymer battery of the present invention.
Fig. 2 is a cyclic voltamogram, in a 1 M polyvinylsulfonic acid solution, of a polyaniline used in the present invention (a sweep rate = 10 mV/sec).
Fig. 3 is a schematic view of a measuring cell which can be used to inspect the electrochemical properties of an electrode active material of the polymer battery.
Fig. 4 is a cyclic voltamogram, in a 0.5 M trifluoroacetic acid propylene carbonate solution, of a polyaniline electrode used in the polymer battery of the present invention (a sweep rate = 10 mV/sec).
Fig. 5 is a cyclic voltamogram of a polypyridine electrode used in the polymer battery of the present invention (a sweep rate = 10 mV/sec). Fig. 5 (a) is the cyclic voltamogram in a 1 M aqueous polyvinylsulfonic acid solution, and Fig. 5 (b) is the cyclic voltamogram in the 0.5 M trifluoroacetic acid propylene carbonate solution.

### DETAILED DESCRIPTION OF THE INVENTION

Next, the present invention will be described in more detail in accordance with examples.

In a polymer battery of the present invention, the undermentioned polymer or compound is used as an electrode active material, and charge and discharge are carried out by the adsorption and desorption of a proton of the electrode active material. As a positive active material and a negative active material, therefore, there can be used a polymer or a compound which can be concerned only with the adsorption and desorption of the proton in an oxidation-reduction reaction thereof.

The compound (the active material) constituting a pair of electrodes for the polymer battery of the present invention is a π-conjugated polymer including a nitrogen atom, or a quinone compound. Both of a positive pole and a negative pole may be made of either of these compounds, or the positive pole may be made of one compound and the negative pole may be made of the other compound. Alternatively, one electrode may be made of both the compounds.

The π-conjugated polymer including the nitrogen atom is preferably a polymer having an amino group in the molecule. Examples of the π-conjugated polymer include aromatic polyamines such as polyanilines represented by 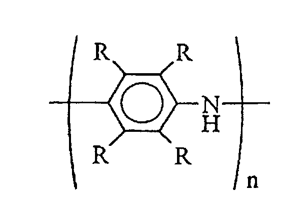 the following formula and their derivatives:

Furthermore, other preferable examples of the π-conjugated polymer including the nitrogen atom are polymers having the nitrogen atom in an aromatic ring. Examples of such polymers include polypyrroles, polypyridines and polypyrimidines represented by the following formulae, and derivatives thereof:

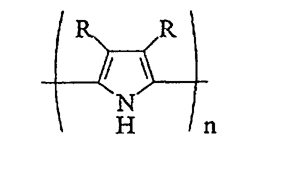

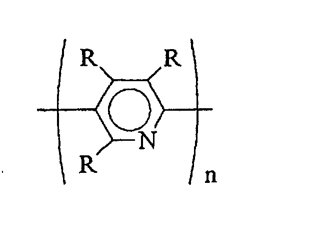

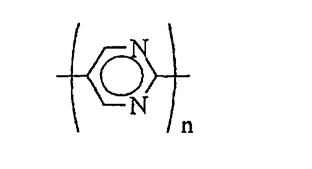

As the polyanilines and their derivatives which can be used in the present invention, compounds prepared by a chemical polymerization are preferable. This reason is as follows.

The polyaniline or the like, when reduced, becomes an insulating state. Therefore, it is necessary to add a conductive additive (a conductive auxiliary) to the electrodes, but this conductive additive cannot be uniformly dispersed in the electrodes, because the polyaniline or the like prepared by electrolytic polymerization is in the form of a film. On the contrary, the polyaniline or the like prepared by chemical polymerization can easily be obtained in a powder state, and hence, the conductive additive can be uniformly mixed and dispersed in the electrodes and its amount can also be optionally controlled. Therefore, in the case that the polyaniline or the like prepared by the chemical polymerization is used, the resistance of the electrodes can be controlled by adding the conductive additive, even when the polyaniline or the like becomes a reduced state, so that a battery which enables the rapid charge and discharge can be prepared.

Examples of the quinone compound include benzoquinones, naphthoquinones, anthraquinones and indanthrones represented by the following formulae, and derivatives thereof: 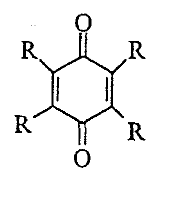 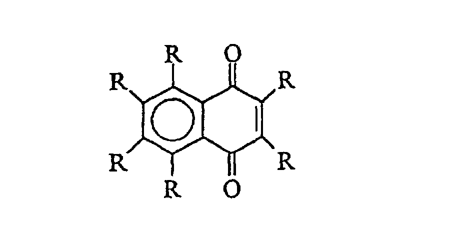 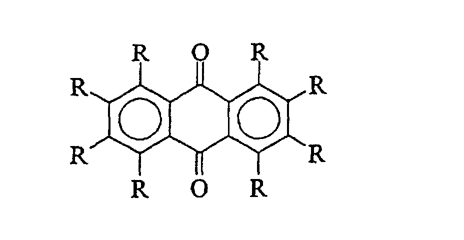 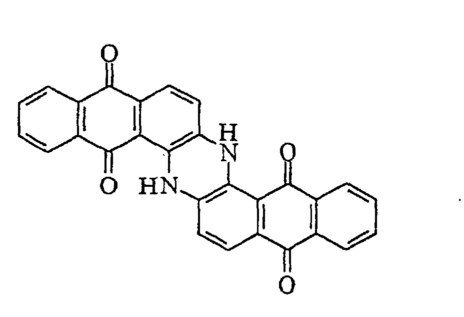 wherein each R is independently a hydrogen atom, an alkyl group, a phenyl group, a hydroxyl group, an alkoxy group, a nitro group, a sulfonic group, an amino group, a halogen atom or a cyano group.

As a dopant which can be used as the above-mentioned active material and which can express the conductivity of the polymer, either of an organic compound and an inorganic compound can be used, and any dopant can be used without limitation, so long as the polymer can be doped therewith. The compound having the hydroxyl group which can be used as the above-mentioned active material can be mixed with carbon or the like as the conductive auxiliary.

As an electrolyte for use in the battery of the present invention, there can be used an aqueous solution or a non-aqueous solution including the proton source, or a solid electrolyte or a gel electrolyte having a proton conductivity, and no particular restriction is put on the kind of electrolyte.

Next, the present invention will be described in more detail in accordance with examples, but the scope of the present invention should not be limited to these examples.

### Example 1

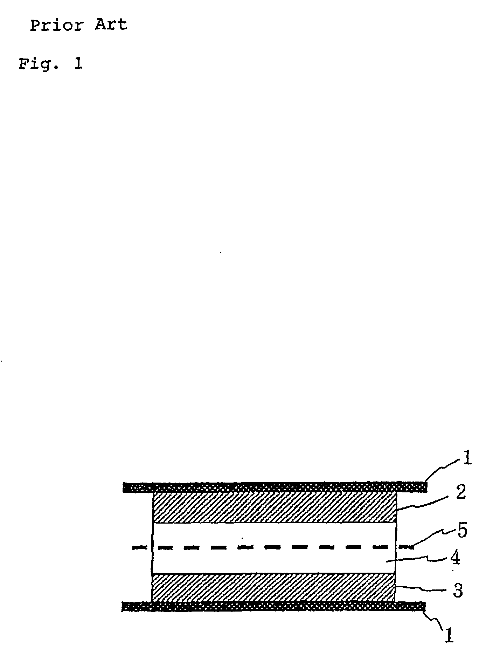

Fig. 1 is a schematic sectional view of a first embodiment of a polymer battery of the present invention.

Both of a positive pole active material 2 and a negative pole active material 3 in Fig. 1 are a polyaniline doped with polyvinylsulfonic acid (hereinafter referred to as "PAn/PVS"), and the positive and negative poles have a thickness of 50 µm, respectively. The positive pole active material 2 and the negative pole active material 3 are each impregnated with a 1 M aqueous polyvinylsulfonic acid (PVSA) solution which is an electrolyte 4. Furthermore, these pole active materials are formed into films on a current collector 1 comprising a conductive film, and they are arranged so as to face each other via an ion-permeable insulating porous separator 5 having a thickness of 25 µm. Here, the films of the active material on the current collector are utilized as electrodes.

The preparation of the polymer battery regarding this embodiment comprises the three steps of (1) the formation of the electrodes, (2) the pretreatment of the electrodes, and (3) the assembly of the battery. Next, the respective steps will be described.

Firstly, the formation of the electrodes for use in the polymer battery of this embodiment will be described as the step (1).

In Fig. 1, the positive pole active material 2 and the negative pole active material 3 are a polyaniline doped with polyvinylsulfonic acid (PAn/PVS) which is an organic dopant. This PAn/PVS was obtained by adding a 6 M aqueous PVSA solution to an undoped polyaniline powder prepared by chemical polymerization, allowing the mixture to stand for 6 hours in a hot bath at 70°C, followed by washing and drying.

A DMF solvent was added to a mixture of 80% by weight of this PAn/PVS powder, 5% by weight of a carbon powder as a conductive auxiliary and 15% by weight of polyvinylidene fluoride (PVDF) as a binder, and they were then mixed, thereby preparing a slurry.

Next, this slurry was formed into films on the current collector 1 by a screen printing method, and the resultant films were then dried at 120°C for 30 minutes to obtain electrodes of 2x2 cm².

Afterward, the positive pole active material 2 and the negative pole active material 3 were impregnated with a 1 M aqueous PVSA solution as the electrolyte 4 for 15 minutes under reduced pressure.

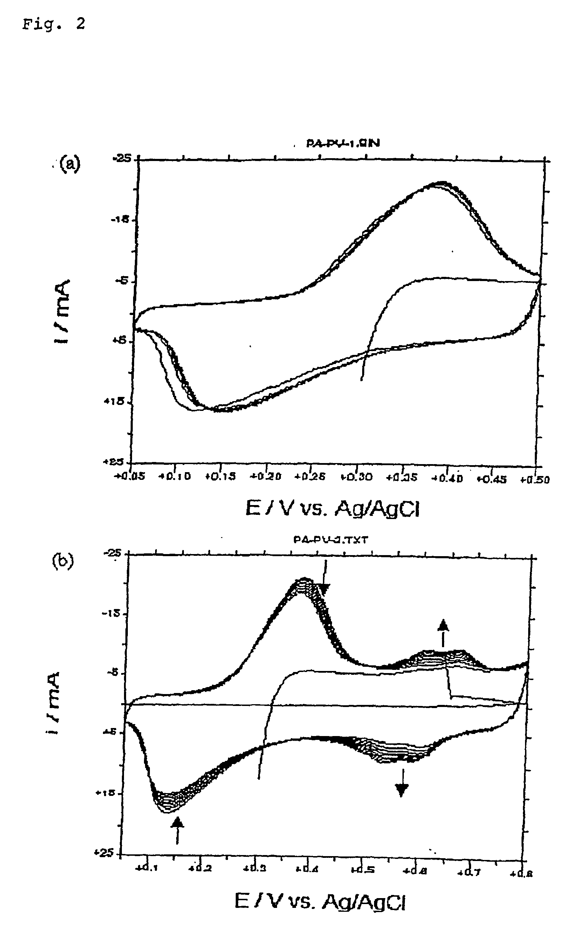

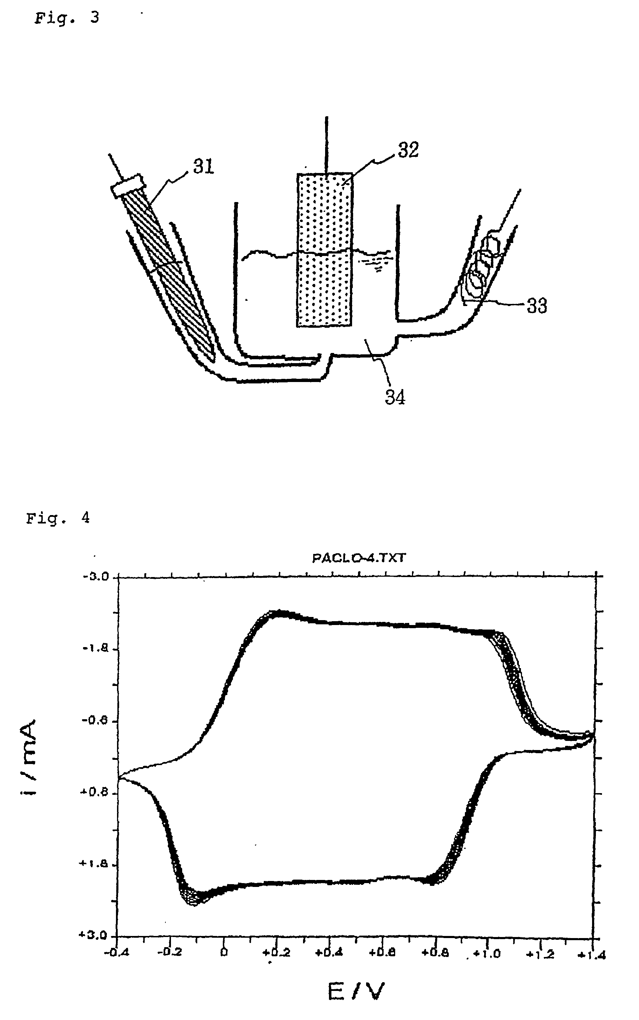

Next, the pretreatment of the electrodes which is the step (2) will be described with reference to Figs. 2 and 3.

Fig. 3 is a schematic view of a measuring cell used to inspect the electrochemical properties of the electrode active material. In the measuring cell of Fig. 3, a 1 M aqueous PVSA solution, a silver/silver chloride electrode and a PAn/PVS electrode were used as an electrolyte 34, a reference electrode 31 and a work electrode 32, respectively, and the electrochemical properties of the PAn/PVS electrode were confirmed.

Fig. 2 is a cyclic voltamogram (hereinafter abbreviated to "CV") of the PAn/PVS electrode measured by the use of the measuring cell of Fig. 3.

Firstly, a natural potential of the PAn/PVS electrode was measured by the use of the measuring cell of Fig. 3. At this time, the potential was about +0.35 V. Next, to the reference electrode 31, the potential was swept from the natural potential to +0.5 V toward an oxidation side. In succession, the potential was swept to +0.05 V toward a reduction side, and it was then swept toward the oxidation side again. The CV obtained by repeating this potential sweep of from +0.05 V to +0.5 V is shown in Fig. 2 (a). Similarly, the CV obtained by repeating the sweep of from +0.05 V to +0.8 V is shown in Fig. 2 (b). It was confirmed in Fig. 2 (b) that peak current values on the reduction potential side decreased every the repetition of the sweep [arrows in Fig. 2 (b)]. Therefore, it was confirmed that an oxidation-reduction reaction which occurred at +0.5 V or more was an irreversible reaction and the deterioration of the polyaniline took place.

In this example, an oxidation peak in the vicinity of +0.4 V in Fig. 2 (a) was used as a charging reaction at the positive pole, and a reduction peak in the vicinity of +0.1 V was used as a charging reaction at the negative pole.

Furthermore, since the natural potential of this electrode active material is in the vicinity of +0.35 V, there is a possibility that a potential at which the irreversible reaction occurs is applied to the positive pole, when the charging is started from the natural potential. Thus, prior to the preparation of the battery, the following pretreatment of the electrode active material was carried out to prevent the peroxidation of the positive pole. That is to say, in this example, as the pretreatment of the electrode active material, there was conducted a treatment of applying +0.5 V to the electrode on the positive pole side and +0.1 V to the electrode on the negative pole side for 5 minutes, respectively, by the use of the measuring cell of Fig. 3.

Lastly, as the step (3) (the assembly of the battery), the charged positive pole and negative pole which had been subjected to the above-mentioned pretreatment were arranged so as to face each other via a separator 5 shown in Fig. 1, thereby completing the battery.

### Working principle of the polymer battery of Example 1:

The working principle of the polymer battery of this example having the constitution in Fig. 1 will be described with reference to Fig. 2 and the following formula:

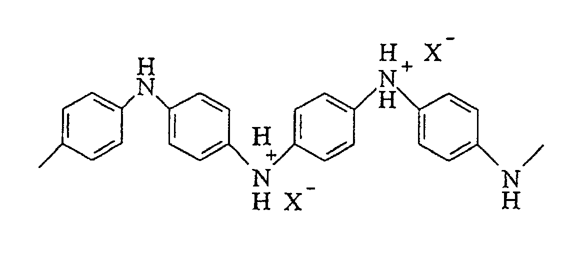

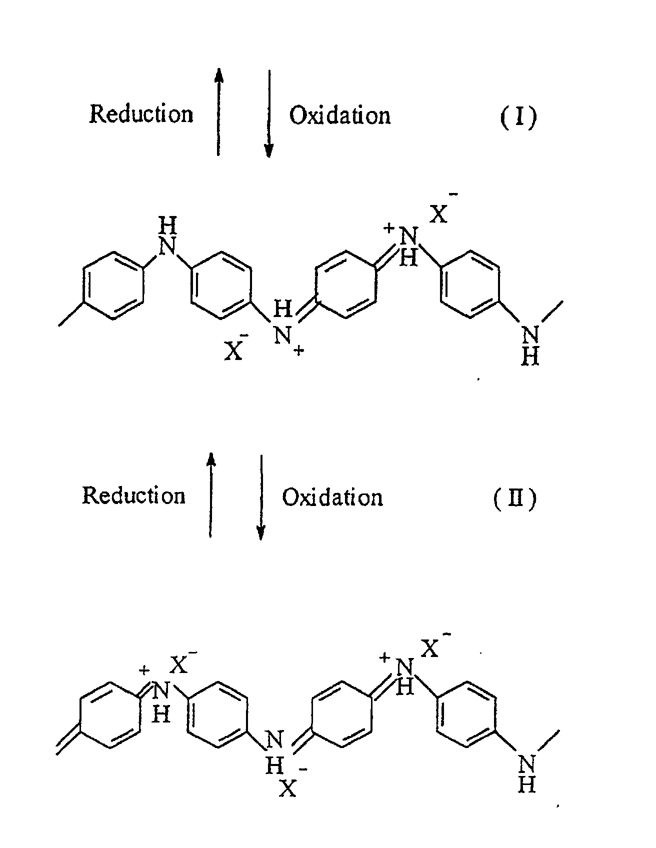

The above-mentioned formula exhibits the charge and discharge mechanism of the polymer battery in which the PAn/PVS is used as the positive pole active material. In the polyaniline, an electron on a nitrogen atom is drawn by an oxidation reaction, and a proton bonded to or coordinated with the nitrogen atom is eliminated from and then released into the electrolyte, so that the aromatic polyaniline changes into a quinoid structure. This oxidation reaction is the charge mechanism of the positive pole.

Furthermore, the polyaniline receives the electron from the current collector, and the proton in the electrolyte is adsorbed on the nitrogen atom, so that the polyaniline having the quinoid structure changes into the aromatic type, whereby a reduction reaction occurs. This reduction reaction is the discharge mechanism of the negative pole.

When the PAn/PVS is used as the negative pole active material, the charge and discharge mechanism is opposite to the above-mentioned mechanism. That is to say, the reduction reaction is the charge mechanism and the oxidation reaction is the discharge mechanism.

The aromatic polyaniline is in an insulating state, but when it takes the quinoid structure, an electron conductivity of the polyaniline can be expressed [this corresponds to a reaction (I) of the above-mentioned formula at the oxidation peak in Fig. 2 (a)]. When the oxidation is further carried out, an anion in the electrolyte is doped [this corresponds to a reaction (II) of the above-mentioned formula at a second oxidation peak which appears on the oxidation potential side in Fig. 2 (b)], and the polyaniline transfers to the insulating state again, but this reaction in the aqueous solution is the irreversible reaction as described above. Therefore, when the second oxidation-reduction reaction is utilized, good cyclic properties cannot be obtained.

Thus, the polymer battery of the present invention is a battery in which much attention is paid to the above-mentioned electrode reactions, and the first oxidation-reduction reaction for giving the reversibility, i.e., the charge and discharge mechanism due to the bonding and elimination of the proton involving the electron transfer of the active material can be only utilized.

### Effects of Example 1:

The test results regarding the charge and discharge performance and the cyclic properties of the polymer battery of Example 1 regarding the present invention are shown in Table 1 together with the results of batteries of undermentioned Comparative Examples 1 and 2 prepared by conventional techniques. In this connection, test conditions are also shown in Table 1. Each capacity in Table 1 is converted by a weight of the electrode active materials (a total weight of both the electrodes). A capacity appearance ratio means a ratio of the obtained capacity with respect to a theoretical capacity.

In the battery of Comparative Example 1, the capacity largely decreases with the increase of a discharge rate, and in the battery of Comparative Example 2, a dischargeable current is very small. These results mean that in the batteries of Comparative Examples 1 and 2, the rapid charge and discharge are impossible.

On the contrary, in this example, the decrease ratio of the capacity is low, even when the discharge rate increases. In addition, the capacity appearance ratio after 1000 cycles is higher than an initial value of Comparative Example 1, and the decrease ratio to an initial value of this example is also low. That is to say, it is apparent from the results of Table 1 that the battery of this example permits the rapid charge and discharge and is excellent in the cyclic properties.

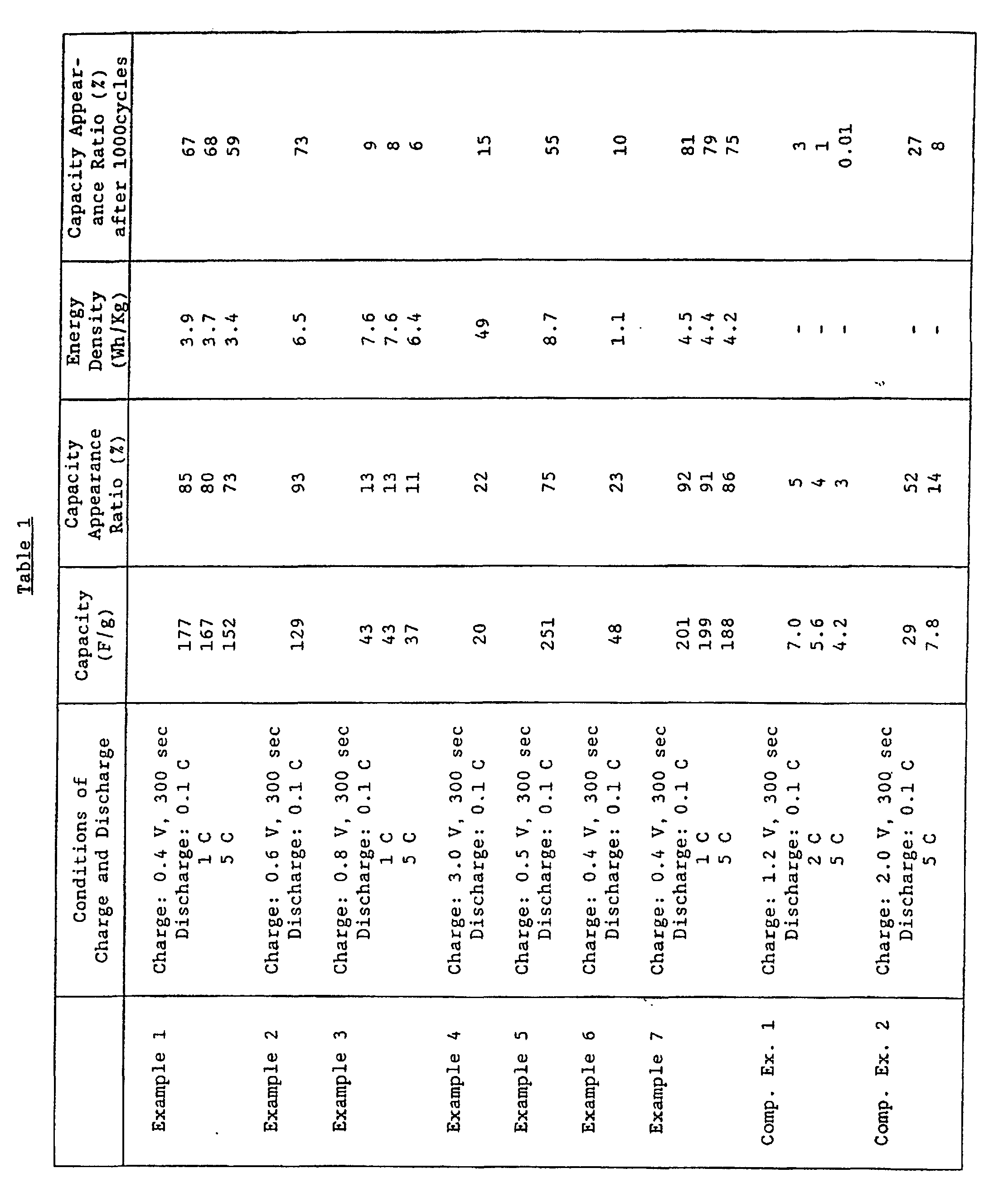

Next,- the reason why the above-mentioned effects can be obtained will be described.

For the first effect that the rapid charge and discharge are possible, two reasons are present. The first reason is as follows. A rate-determining step of the charge and discharge of the battery is the transfer of an ion, but the proton regarding the charge and discharge of the polymer battery according to the present invention has a larger diffusion coefficient than an alkali metal ion or an alkaline earth metal ion which can be used in a conventional battery. The second reason is as follows. Since the ion size of the proton is small, a volume change of the polyaniline by the proton bonding and elimination in the polymer is small, and at a working voltage regarding the present invention, the anionic dopant scarcely transfers, so that the volume change of the polyaniline is scarcely present. That is to say, if the ion size is large, a mechanical stress which is loaded onto the polymer is large when the ion is adsorbed into and desorbed from the polymer, and when the anionic dopant transfers to diffuse inside and outside the electrodes, and in consequence, the drop of a reaction rate and the deterioration of the polymer are caused. In the present invention, however, the proton having the small ion size is bonded and eliminated with the electron transfer, and the anionic dopant does not transfer. Hence, the above-mentioned problems do not rise. For the above-mentioned reasons, the good rapid charge and discharge are possible.

For the second effect that the good cyclic properties can be obtained, two reasons are present. The first reason is as follows. Since the ion size of the proton is small, a volume change and a structure change of the electrode active material by the bonding and elimination of the proton are smaller as compared with other ions, and at the working voltage regarding the present invention, the anionic dopant scarcely transfers, so that the volume change and the structure change of the electrode active material scarcely take place. In addition, there can be inhibited the increase of a contact resistance between an active material layer and a current collector surface which is caused by the volume change of the active material. The second reason is as follows. In the case that the polyaniline is used, the peroxidation of the polyaniline occurs at the second oxidation peak in the aqueous solution, and therefore the irreversible reaction is contained therein. In the polymer battery of the present invention, however, the first oxidation peak in which any peroxidation does not occur is utilized. For the above-mentioned reasons, the good cyclic properties can be obtained.

### Example 2

The same procedure as in Example 1 was conducted except that a propylene carbonate (PC) solution containing 0.5 M trifluoroacetic acid as a proton source was used as an electrolyte and the pretreatment of electrodes was carried out in the undermentioned manner, thereby preparing about the same polymer battery as in Example 1.

Fig. 4 is a CV of a PAn/PVS electrode measured by a measuring cell of Fig. 3 in which a silver wire was used as a reference electrode. In a non-aqueous solution, an oxidation-reduction reaction [which corresponds to a reaction (II) of the above-mentioned formula] on the oxidation potential side of the polyaniline was reversible. In a potential sweep range in Fig. 4, the deterioration of the polyaniline was not confirmed. Therefore, this oxidation-reduction reaction in the vicinity of +0.8 V can be considered to be the reversible reaction. It can be confirmed from Fig. 4 that a potential difference between a potential of the oxidation-reduction reaction on the side of a reduction potential and that of the oxidation-reduction reaction on the side of the oxidation potential is larger than in the case of Fig. 2 (b). In this example, therefore, a working voltage larger than in Example 1 can be taken.

In this example, as the pretreatment of the electrode active material, +0.5 V was applied to a silver wire as a positive pole and -0.1 V was applied to a negative pole to charge the electrode active material, and a battery was then prepared in the same manner as in Example 1.

Working principle of the polymer battery of Example 2:

The oxidation-reduction reaction in the non-aqueous solution of the polyaniline is different from a reaction in an aqueous solution, and the oxidation-reduction reaction on the oxidation potential side is a reversible reaction. However, in the battery of the present invention, the bonding and elimination of the proton are utilized, and a second oxidation reduction peak by the doping and dedoping of an anion is not always utilized. In consequence, the working principle of the polymer battery of this example is the same as in Example 1.

### Effects of Example 2:

The test results regarding the charge and discharge performance and the cyclic properties of the polymer battery of Example 2 regarding the present invention are shown in Table 1 (test conditions are also shown in Table 1).

In the battery of this example, a capacity appearance ratio after 1000 cycles was 78% of an initial value, which means that a decrease ratio was low. Also in this example, the good cyclic properties could be obtained. As compared with conventional batteries shown in the comparative examples, the cyclic properties were more excellent.

Furthermore, a working voltage was larger as compared with that of Example 1, and an energy density was improved. This reason is that in the PC solution, a potential difference between the oxidation-reduction reaction on the reduction potential side by the adsorption and desorption of the proton and the oxidation-reduction reaction on the oxidation potential side by the doping and dedoping of the anion is large, and these reactions are reversible, so that the working voltage can be set to about 0.6 V which is larger than 0.4 V in Example 1.

### Example 3

The same procedure as in Example 1 was conducted except that a polypyridine doped with polyvinylsulfonic acid (hereinafter abbreviated to "Ppy/PVS") was used as a negative pole active material in place of a PAn/PVS and its pretreatment was carried out in the undermentioned manner, thereby preparing a polymer battery. However, since the theoretical capacity of the polypyridine was about 4 times as much as that of a polyaniline, a weight balance between a positive pole and a negative pole was constituted in such a weight ratio as to obtain a maximum capacity per unit weight. That is to say, the weight of the positive pole to that of the negative pole was set to 4:1. Moreover, from this weight ratio, a theoretical capacity was calculated.

The Ppy/PVS which was the negative pole active material was prepared as follows. To a polypyridine powder obtained by chemical polymerization, a 6 M aqueous PVSA solution was added, and the mixture was then allowed to stand in a hot bath at 70°C for 6 hours to carry out doping. Next, this Ppy/PVS was washed and dried to obtain a Ppy/PVS powder. A DMF solvent was added to a mixture of 80% by weight of this Ppy/PVS powder, 5% by weight of a carbon powder and 15% by weight of polyvinylidene fluoride (PVDF) as a binder, and they were then mixed, thereby preparing a slurry. Next, this slurry was formed into films on a current collector by a screen printing method, and the resultant films were then dried at 120°C for 30 minutes to obtain electrodes.

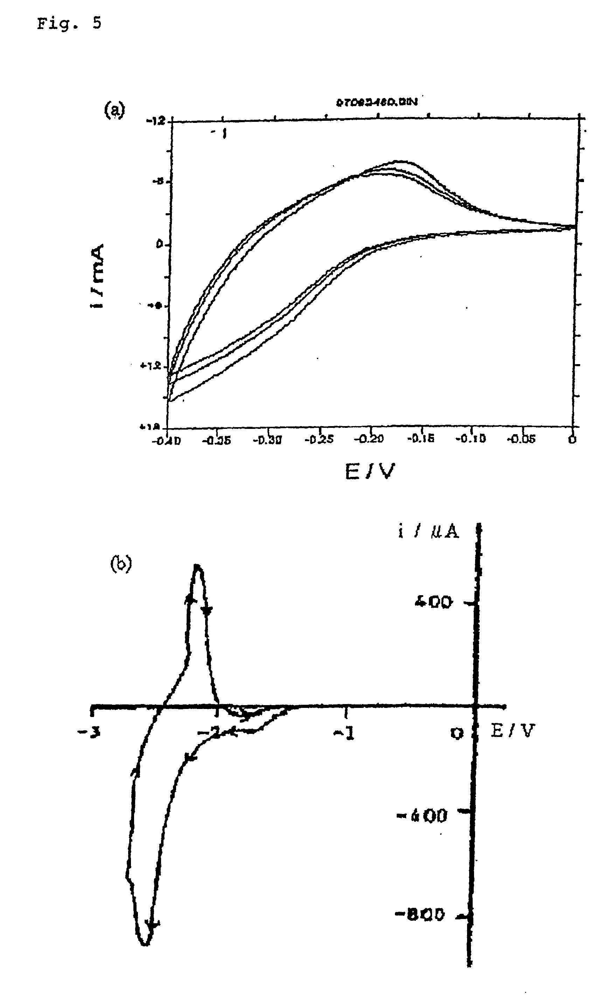

Fig. 5 (a) is a CV in a 1 M aqueous PVSA solution of the Ppy/PVS measured by a measuring cell of Fig. 3. In order to utilize the Ppy/PVS as the negative pole active material, -0.3 V was applied to a reference electrode as the pretreatment, and the battery was then prepared in the same manner as in Example 1.

Working principle of the polymer battery of Example 3:

Since a PAn/PVS was used as the positive pole active material and the aqueous solution system was employed, the working principle was the same as in Example 1.

Next, the charge and discharge of the electrode in which the polypyridine was used as the negative pole active material will be described. When the polypyridine doped with polyvinylsulfonic acid (Ppy/PVS) was used as the negative pole active material, a reaction mechanism was as follows.

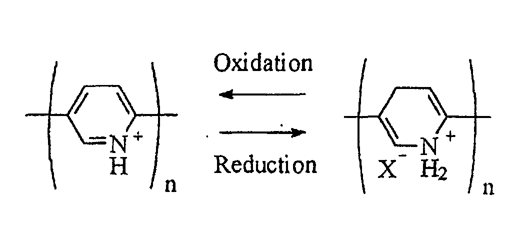

Also in the case of the polypyridine, the charge and discharge are carried out by the bonding and elimination of a proton on a nitrogen atom. By a reduction reaction, the polypyridine receives an electron, and the proton in the solution is bonded to or coordinated with the nitrogen atom. This is a charge mechanism. Furthermore, by an oxidation reaction, the electron is drawn from the nitrogen atom, and the proton is eliminated into and released to the solution. This is a discharge mechanism.

### Effects of Example 3:

The test results regarding the charge and discharge performance and the cyclic properties of the polymer battery in this example are shown in Table 1 (test conditions are also shown in Table 1). In the battery of this example, the good cyclic properties are obtained even after 1000 cycles. Furthermore, in this example, an energy density is more improved than in Example 1. This reason is that an oxidation-reduction potential of the polypyridine is closer to a negative potential side than a first oxidation-reduction potential of the polyaniline, and so a working voltage can be set to a larger value than in Example 1.

### Example 4

The same procedure as in Example 3 was conducted except that the 1 M aqueous PVSA solution was replaced with a PC solution including 0.5 M of trifluoroacetic acid as an electrolyte for a battery, thereby preparing the battery. An electrode active material for a positive pole was prepared in a manner described in Example 1 and an electrode active material for a negative pole was prepared in a manner described in Example 3. Also in this example, since the theoretical capacity of a polypyridine was about 4 times as much as that of a polyaniline, a weight balance between the positive pole and the negative pole was constituted in such a weight ratio as to obtain a maximum capacity per unit weight. That is to say, the weight of the positive pole to that of the negative pole was set to 4:1. Moreover, from this weight ratio, the theoretical capacity was calculated.

Fig. 5 (b) shows a CV of a Ppy/PVS electrode measured by a measuring cell of Fig. 3 in which a silver/silver ion electrode is used as a reference electrode.

The pretreatment of the electrodes was carried out by applying +0.5 V to a PAn/PVS of the positive pole and -2.5 V to a Ppy/PVS of the negative pole with respect to the reference electrode by the use of the measuring cell of Fig. 3 in the PC solution including 0.5 M of trifluoroacetic acid. The battery of this example was assembled by the same procedure as in Example 3.

In this example, the working principle regarding the PAn/PVS of the positive pole is the same as in Example 2, and the working principle regarding the Ppy/PVS of the negative pole is the same as in Example 3.

The test results regarding the charge and discharge performance and the cyclic properties of the polymer battery in Example 4 are shown in Table 1 (test conditions are also shown in Table 1). In the battery of this example, an energy density is remarkably improved. This reason is that a working voltage can be set to a large value.

### Example 5

An aqueous solution system battery was prepared in which a PAn/PVS was used as a positive pole and anthraquinone was used as a negative pole. The positive pole was prepared in the same manner as in Example 1.

Since anthraquinone which was used as the negative pole active material was not a conductive polymer, carbon was added as a conductive auxiliary and a binder was further added, followed by mixing, and the electrodes having an electrical conductivity were prepared as follows. A DMF solvent was added to a mixture of 50% by weight of an anthraquinone powder, 40% by weight of a carbon powder and 10% by weight of PVDF as a binder, thereby preparing a slurry. The thus prepared slurry was formed into a film on a current collector by a screen printing method, and the resultant film was then dried at 120°C for 30 minutes to obtain the electrode having a thickness of 50 µm.

Next, this electrode was impregnated with a 1 M aqueous PVSA solution in vacuo, and as the pretreatment of the electrode, +0.5 V was applied to the positive pole and 0 V was applied to the negative pole with respect to a reference electrode by the use of a measuring cell of Fig. 3, whereby the electrodes were charged. Afterward, the battery of this example was assembled by the same procedure as in Example 1.

Working principle of the polymer battery of Example 5:

Since the aqueous solution system is employed as an electrolyte in Example 5, the working principle of the PAn/PVS electrode which is the positive pole is the same as in Example 1.

Next, the reaction of anthraquinone used as the negative pole will be described. The following formula shows the reaction mechanism of anthraquinone.

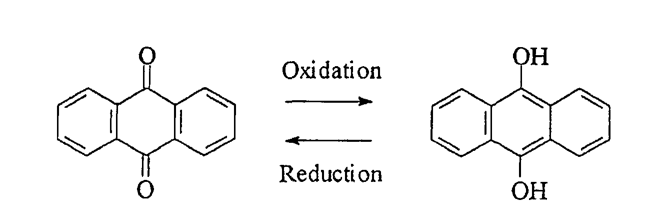

When anthraquinone is oxidized, an electron at a double bond site is drawn, so that the bond is cleaved and an oxygen atom has a negative charge. Then, a proton in the solution is bonded thereto to form a hydroxyl group. This is a discharge mechanism in the case that anthraquinone is used as the negative pole active material. Furthermore, when reduction is carried out, the oxygen atom forms the double bond again, and the proton is released into the solution. This is a charge mechanism in the case that anthraquinone is used as the electrode.

The test results regarding the charge and discharge performance and the cyclic properties of the polymer battery in this example are shown in Table 1 (test conditions are also shown in Table 1). In the battery of this example, a capacity appearance ratio after 1000 cycles was 73% of an initial value, which meant that a decrease ratio was low, so that the good cyclic properties could be obtained.

In this example, an energy density is more improved than in Example 1. This reason is that a theoretical capacity is larger as compared with that of Example 1. Anthraquinone has two reaction sites in one molecule, and its oxidation-reduction reaction is a two-electron reaction. Therefore, the capacity per unit weight increases, so that an effect that the energy density is improved can be obtained.

### Example 6

In a battery of Example 6, a 1 M PVSA electrolyte for a battery of Example 1 is replaced with a gel electrolyte obtained by adding a small amount of a PC solution including 0.5 M of trifluoroacetic acid used in Example 2 to a proton conductive solid electrolyte Naphion (registered trademark).

The oxidation-reduction reaction of the electrodes in the polymer battery of this example is the same as in Example 1, but the feed of the proton to the electrodes and the release of the proton from the electrodes can be carried out through the gel electrolyte instead of the solution.

The test results regarding the charge and discharge performance and the cyclic properties of the polymer battery in this example are shown in Table 1 (test conditions are also shown in Table 1). In the battery of this example, a capacity appearance ratio is somewhat lower than in Example 1 in which the solution electrolyte is used. This result is due to a fact that the ion conductivity of the gel electrolyte is several figures lower than that of the solution.

In this example, the employment of the gel electrolyte can inhibit a liquid leakage from the battery. In addition, owing to the inhibition of the liquid leakage, a metallic sheath is no necessary any more, so that a simple sheath is acceptable, which permits the preparation of a film-like flexible battery.

### Example 7

A battery of Example 7 uses electrodes obtained by mixing anthraquinone with the electrode active material in Example 1 and then forming films therefrom.

A PAn/PVS powder was prepared in the same manner as in Example 1. A DMF solvent was added to a mixture of 70% by weight of this PAn/PVS powder, 10% by weight of anthraquinone, 5% by weight of a carbon powder as a conductive auxiliary and 15% by weight of polyvinylidene fluoride (PVDF) as a binder, and they were then mixed to prepare a slurry. The thus prepared slurry was formed into films on a current collector by a screen printing method, and the resultant films were then dried at 120°C for 30 minutes to obtain the electrodes.

In the polymer battery of this example, a 1 M aqueous PVSA solution was used as an electrolyte. A positive pole active material and a negative pole active material on a current collector were impregnated with the electrolyte for 15 minutes in vacuo, and a pretreatment was carried out in the same manner as in Example 1 to charge the electrodes. Afterward, these electrodes were arranged so as to face each other via a separator to complete the battery.

The quinone compound used in the present invention functions as a mediator for facilitating the receipt and release of a proton between the electrolyte and the electrode active material. In this mediate function, an oxidation-reduction reaction rate can be facilitated by an interaction between a nitrogen atom of a polyaniline and an oxygen atom of anthraquinone.

The test results regarding the charge and discharge performance and the cyclic properties of the polymer battery in this example are shown in Table 1 (test conditions are also shown in Table 1).

The first effect, which the battery of this example has, is to improve an energy density. This reason is that the quinone in which two electron reactions are carried out per molecule is composed, and hence a theoretical capacity is large, and in addition, the reaction is facilitated by the catalytic function of a positive electric charge of a nitrogen atom of the polyaniline and a negative electric charge of hydroquinone present in the vicinity of a reaction site, whereby a capacity appearance ratio is improved.

The second effect is that a decrease ratio of a discharge capacity is low even when a discharge rate is increased. This reason is that the oxidation-reduction reaction is facilitated by the catalytic function of the positive electric charge of the nitrogen atom of the polyaniline and the negative electric charge of hydroquinone present in the vicinity of the reaction site, whereby the reaction can follow rapid charge and discharge.

As the third effect, a capacity appearance ratio after 1000 cycles was 88% of an initial value, which meant that the decrease ratio was very low. Accordingly, in this example, the good cyclic properties could be obtained, as in the other examples of the present invention.

### Comparative Example 1

As the constitution of a battery, an electrolytically polymerized polyaniline electrode using an organic dopant was used as a positive pole material, and zinc was used as a negative pole material. As an electrolyte, an aqueous solution was used.

The battery of this comparative example was poor in cyclic properties, as shown in Table 1. This reason is that, in the oxidation-reduction reaction in the aqueous polyaniline solution, a cycle operation is carried out until 0.8 V vs. SCE at which an irreversible reaction occurs at a second oxidation peak, and hence, it can be considered that the peroxidation of the polyaniline occurs.

Moreover, the battery of this comparative example was heavy and had a low energy density. This reason is that a metal having a specific gravity larger than any organic compound used in the present invention is used.

### Comparative Example 2

According to the constitution of a battery of this comparative example, a polyaniline was used as a positive pole, and carbon was used as a negative pole. As an electrolyte, there was used a mixed solvent of propylene carbonate containing lithium perchlorate and propylene carbonate.

The battery of this comparative example could not realize rapid charge and discharge. Because the doping of an anion is done in the positive pole and a reaction by the intercalation of a cation into the negative pole is carried out in the negative pole.

The battery of this comparative example was poor in cycle properties as shown in Table 1. The reason why the good cycle properties are not obtained is that the above-mentioned doping and intercalation are accompanied by the volume change and the structure change of the electrode active material.

## Claims

1. A polymer battery comprising at least a pair of electrodes for carrying out a receipt and release of electrons in accordance with an oxidation-reduction reaction of a compound to take out an electric energy, and an electrolyte in liquid, solid or gel form, wherein
a positive electrode active material and a negative electrode active material is either a π-conjugated polymer including a nitrogen atom or a quinone compound combined with a π-conjugated polymer including a nitrogen atom;
at least one of the electrodes is precharged prior to assembly of the polymer battery at a potential different from the electrodes' natural potential to avoid irreversible reactions which would otherwise occur during charging of the polymer battery;
the electrolyte contains a proton source; and
a proton concentration of the electrolyte is set and a working voltage is controlled so that the receipt and release of the electrons in accordance with the oxidation-reduction reaction of the active materials of the positive and negative constituting the electrodes are carried out only by the bonding and elimination of the proton bonded to or coordinated with the nitrogen atom or the proton of a produced hydroxyl group.

2. A battery comprising:
a first electrode with a first electrode active material for carrying out a charge and a discharge by an adsorption and a desorption of a proton of the electrode active material;
a second electrode with a second electrode active material for carrying out a charge and a discharge by an adsorption and a desorption of a proton of the second electrode active material;
an electrolyte intermediate the first and the second electrode, the electrolyte including a proton source material; and
an ion-permeable separator located within the electrolyte,
wherein the first electrode active material and the second electrode active material is either a π-conjugated polymer including a nitrogen atom or a quinone compound combined with a π-conjugated polymer including a nitrogen atom,
at least one of the electrodes is precharged prior to assembly of the polymer battery at a potential different from the electrodes' natural potential to avoid irreversible reactions which would otherwise occur during charging of the polymer battery; and
a charge and a discharge of the first and second electrodes are provided only by a bonding and an elimination or a proton on the nitrogen atom or a proton of a produced hydroxyl group.

3. The polymer battery according to claim 1 or 2, wherein the π-conjugated polymer including the nitrogen atom which constitutes the electrodes is a polymer having an amino group in its molecule.

4. The polymer battery according to claim 1 or 2 wherein the π-conjugated polymer including the nitrogen atom which constitutes the electrodes is a polymer selected from the group consisting of polyanilines and its derivatives represented by the following formula wherein each R is independently a hydrogen atom, an alkyl group, a phenyl group, a hydroxyl group, an alkoxy group, a nitro group, a sulfonic group, an amino group, a halogen atom or a cyano group,

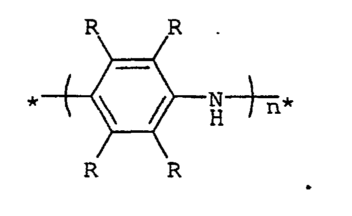

5. The polymer battery according to claim 4 wherein the π-conjugated polymer including the nitrogen atom which constitutes the electrodes is a polymer prepared by chemical polymerisation.

6. The polymer battery according to claim 1 or 2, wherein the π-conjugated polymer including the nitrogen atom which constitutes the electrodes is a polymer having a nitrogen atom in its aromatic ring.

7. The polymer battery according to claim 1 or 2 wherein the π-conjugated polymer including the nitrogen atom which constitutes the electrodes is a polymer selected from the group consisting of polypyrroles, polypyridines, polypyrimidines and derivatives thereof, each represented by the following formulas wherein each R is independently a hydrogen atom, an alkyl group, phenyl group, a hydroxyl group, an alkoxy group, a nitro group, a sulfonic group, an amino group, a halogen atom or a cyano group

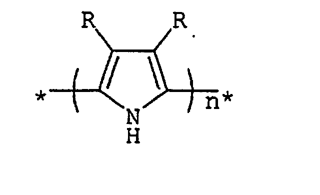

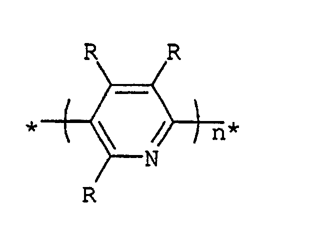

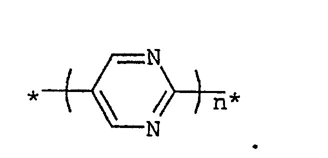

8. The polymer battery according to claim 1 or 2 wherein the quinone compound which constitutes the electrodes is an indanthrone or a compound selected from the group consisting of anthraquinones, naphthoquinones, benzoquinones, and derivatives thereof, each represented by the following formulas wherein each R is independently a hydrogen atom, an alkyl group, phenyl group, a hydroxyl group, an alkoxy group, a nitro group, a sulfonic group, an amino group, a halogen atom or a cyano group

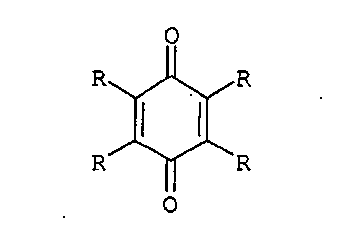

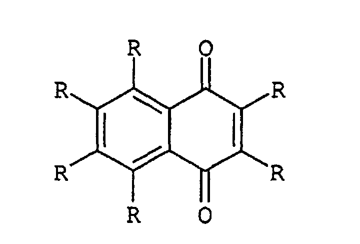

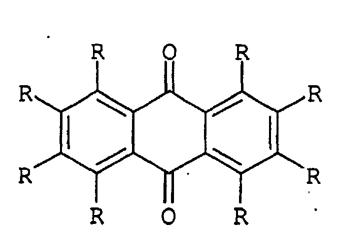

9. A method for charging and discharging a polymer battery as claimed in any one of claims 1 to 8, which comprises the step of controlling a working voltage so that the receipt and release of electrons in accordance with an oxidation-reduction reaction of the active material of the positive and negative electrodes is carried out only by the bonding and elimination of a proton bounded to or coordinated with a nitrogen atom or a proton of a produced hydroxyl group.

10. A method for production of a polymer battery having at least a pair of electrodes for carrying out a receipt and release of electrons in accordance with an oxidation-reduction reaction of a compound to take out an electric energy, and an electrolyte in liquid, solid or gel form, comprising the steps of:
using a π-conjugated polymer including a nitrogen atom, or a π-conjugated polymer including a nitrogen atom and a quinone compound, as an active material of a positive and a negative constituting the pair of electrodes;
precharging at least one of the electrodes prior to assembly of the polymer battery at a potential different from the electrodes' natural potential to avoid irreversible reactions which would otherwise occur during charging of the polymer battery;
using a proton-containing material as the electrolyte; and
setting a proton concentration of the electrolyte and controlling a working voltage to carry out the receipt and release of the electrons in accordance with the oxidation-reduction reaction of the active materials of the positive and negative constituting the electrodes only by the bonding and elimination of the proton bonded to or coordinated with the nitrogen atom or the proton of a produced hydroxyl group.

## Patentansprüche

1. Polymerbatterie mit wenigstens einem Paar Elektroden um das Aufnehmen und Freigeben von Elektronen gemäß einer Oxydations-Reduktions-Reaktion einer Verbindung auszuführen, um eine elektrische Energie zu gewinnen und einem Elektrolyt in flüssiger, fester oder Gel-Form, wobei
das aktive Material einer positiven Elektrode und das aktive Material einer negativen Elektrode entweder ein π-konjugiertes Polymer, das ein Stickstoffatom enthält, oder eine Chinon-Verbindung kombiniert mit einem π-konjugierten Polymer, das ein Stickstoffatom enthält, ist;
wenigstens eine der Elektroden vor dem Zusammenbau der Polymerbatterie auf ein Potential vorgeladen ist, das sich von dem natürlichen Potential der Elektroden unterscheidet, um irreversible Reaktionen, die ansonsten während des Ladens der Polymerbatterie auftreten würden, zu vermeiden;
der Elektrolyt eine Protonenquelle enthält; und
die Protonenkonzentration des Elektrolyt so gesetzt ist, und die Arbeitsspannung so gesteuert wird, daß das Aufnehmen und Freigeben von Elektronen gemäß der Oxydations-Reduktions-Reaktion der aktiven Materialien, welche die positive und negative Elektrode bilden, nur durch Binden und Eliminieren der Protonen, die an das Stickstoffatom gebunden oder mit diesem koordiniert sind, oder des Protons einer erzeugten Hydroxylgruppe durchgeführt wird.

2. Batterie mit:
einer ersten Elektrode mit einem aktiven Material für die erste Elektrode zum Durchführen einer Ladung und einer Entladung durch Adsorption und Desorption eines Protons des aktiven Elektrodenmaterials;
einer zweiten Elektrode mit einem zweiten aktiven Material für die zweite Elektrode zum Durchführen eines Ladens und Entladens durch Adsorption und Desorption eines Protons des aktiven Materials der zweiten Elektrode;
einem Elektrolyt zwischen der ersten und zweiten Elektrode, wobei der Elektrolyt ein Protonenquellenmaterial enthält; und
einem innerhalb des Elektrolyt angeordneten Ionen-durchlässigen Separator,
wobei das aktive Material der ersten Elektrode und das aktive Material der zweiten Elektrode entweder ein π-konjugiertes Polymer, das ein Stickstoffatom enthält, oder eine Chinon-Verbindung kombiniert mit einem π-konjugierten Polymer, das ein Stickstoffatom enthält, ist,
wobei wenigstens eine der Elektroden vor dem Zusammenbau der Polymerbatterie auf ein Potential vorgeladen ist, das sich von dem natürlichen Potential der Elektroden unterscheidet, um irreversible Reaktionen, die ansonsten während des Ladens der Polymerbatterie auftreten würden, zu vermeiden; und
wobei eine Ladung und Entladung der ersten und zweiten Elektroden nur durch Binden oder Elimieren eines Protons entweder an dem Stickstoffatom oder eines Protons der erzeugten Hydroxylgruppe erzeugt wird.

3. Polymerbatterie nach Anspruch 1 oder 2, wobei das π-konjugierte Polymer, welches das Stickstoffatom enthält, das die Elektroden bildet, ein Polymer ist, welches in seinem Molekül eine Aminogruppe hat.

4. Polymerbatterie nach Anspruch 1 oder 2, wobei das π-konjugierte Polymer, das das Stickstoffatom enthält, welches die Elektroden bildet, ein Polymer ist, das aus der Gruppe ausgewählt ist, die besteht aus Polyanilinen und deren Derivaten, repräsentiert durch die folgende Formel, 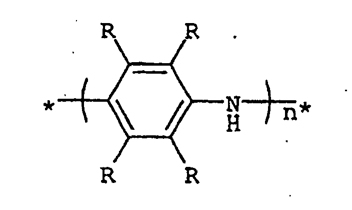 wobei jedes R unabhängig ein Wasserstoffatom, eine Alkylgruppe, eine Vinylgruppe, eine Hydroxylgruppe, eine Alkoloxygruppe, eine Nitrogruppe, eine Sulfongruppe, eine Aminogruppe, ein Halogenatom oder eine Zyanogruppe ist.

5. Polymerbatterie nach Anspruch 4, wobei das π-konjugierte Polymer, welches das Stickstoffatom enthält, das die Elektroden bildet, ein Polymer ist, das durch chemische Polymerisation hergestellt ist.

6. Polymerbatterie nach Anspruch 1 oder 2, wobei das das Stickstoffatom enthaltende π-konjugierte Polymer, welches die Elektroden bildet, ein Polymer ist, das in seinem aromatischen Ring ein Stickstoffatom hat.

7. Polymerbatterie nach Anspruch 1 oder 2, wobei das das Stickstoffatom enthaltende π-konjugierte Polymer, das die Elektroden bildet, ein Polymer ist, das aus der Gruppe ausgewählt ist, die besteht aus Polypyrolen, Polypyridinen, Polypyrimidinen und Derivaten derselben, jeweils repräsentiert durch die folgenden Formeln: 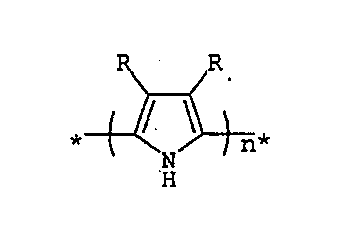 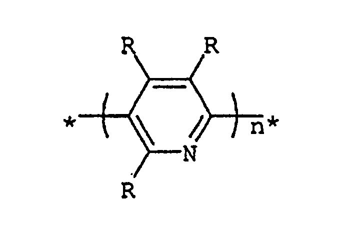 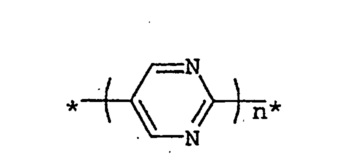 wobei jedes R unabhängig voneinander ein Wasserstoffatom, eine Alkylgruppe, eine Vinylgruppe, eine Hydroxylgruppe, eine Alkoloxygruppe, eine Nitrogruppe, eine Sulfongruppe, eine Aminogruppe, ein Halogenatom oder eine Zyanogruppe ist.

8. Polymerbatterie nach Anspruch 1 oder 2, wobei die Chinon-Verbindung, welche die Elektroden bildet, ein Indanthron oder eine Verbindung ist, die aus der Gruppe ausgewählt ist, bestehend aus Anthrachinonen, Naphthochinonen, Benzochinonen und Derivaten derselben, die jeweils durch die folgenden Formeln repräsentiert sind: 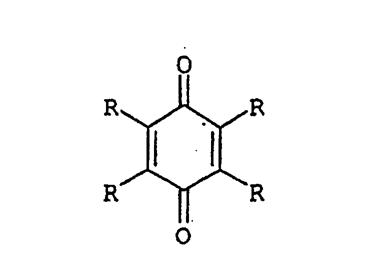 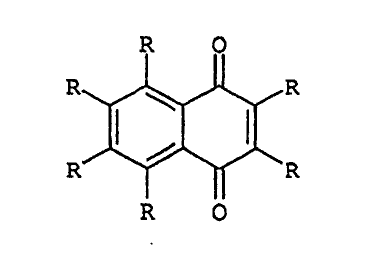 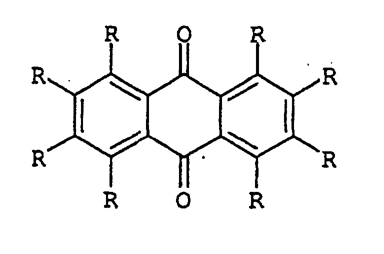 wobei jedes R unabhängig ein Wasserstoffatom, eine Alkylgruppe, eine Vinylgruppe, eine Hydroxylgruppe, eine Alkyloxygruppe, eine Nitrogruppe, eine Sulfongruppe, eine Aminogruppe, ein Halogenatom oder eine Zyanogruppe ist.

9. Verfahren zum Laden und Entladen einer Polymerbatterie nach einem der Ansprüche 1 bis 8, mit dem Schritt Steuern einer Arbeitsspannung dergestalt, daß das Aufnehmen und Freigeben von Elektronen gemäß einer Oxydations-Reduktions-Reaktion des aktiven Materials der positiven und negativen Elektroden nur dadurch ausgerührt wird, daß ein Proton, welches an ein Stickstoffatom gebunden oder zu diesem koordiniert ist, oder ein Proton einer erzeugten Hydroxylgruppe gebunden und eliminiert wird.

10. Verfahren zum Herstellen einer Polymerbatterie mit wenigstens einem Paar Elektroden, um ein Aufnehmen und Freigeben von Elektronen gemäß einer Oxydations-Reduktions-Reaktion einer Verbindung durchzurühren, um eine elektrische Energie zu erzeugen, und einem Elektrolyt in flüssiger, fester oder Gel-Form, mit den Schritten:
Verwenden eines π-konjugierten Polymers, das ein Stickstoffatom enthält, oder eines π-konjugierten Polymers, das ein Stickstoffatom enthält, und einer Chinon-Verbindung als dem aktiven Material einer positiven und negativen Elektrode, die das Paar Elektroden bilden;
Vorladen wenigstens einer der Elektroden vor dem Zusammenbauen der Polymerbatterie auf ein Potential, das sich von dem natürlichen Potential der Elektroden unterscheidet, um irreversible Reaktionen, die ansonsten während des Ladens der Polymerbatterie auftreten würden, zu vermeiden;
Verwenden eines protonenhaltigen Materials als Elektrolyt; und
Setzen einer Protonenkonzentration des Elektrolyt und Steuern einer Arbeitsspannung, um das Aufnehmen und Freigeben von Elektronen gemäß der Oxydations-Reduktions-Reaktion der aktiven Materialien der positiven und negativen Elektroden nur dadurch durchzuführen, daß das mit dem Stickstoffatom gebundene Proton oder mit diesem koordinierte Proton oder das Proton einer erzeugten Hydroxylgruppe gebunden und eliminiert wird.

## Revendications

1. Batterie à polymère comprenant au moins une paire d'électrodes pour effectuer une réception et une libération d'électrons conformément à une réaction d'oxydo-réduction d'un composé pour en extraire une énergie électrique, et un électrolyte sous forme de liquide, de solide ou de gel, dans lequel
un matériau actif d'électrode positive et un matériau actif d'électrode négative est soit un polymère π-conjugué comprenant un atome d'azote soit un composé quinone associé à un polymère π-conjugué comprenant un atome d'azote ;
au moins une des électrodes est préchargée avant l'assemblage de la batterie à polymère à un potentiel différent du potentiel naturel des électrodes pour éviter des réactions irréversibles qui pourraient se produire sans cela durant la charge de la batterie à polymère ;
l'électrolyte contient une source de protons ; et
une concentration de l'électrolyte est fixée et une tension de fonctionnement est réglée de façon à ce que la réception et la libération des électrons conformément à la réaction d'oxydo-réduction des matériaux actifs du positif et du négatif constituant les électrodes soient réalisées seulement par la liaison et l'élimination du proton lié ou cordonné à l'atome d'azote ou du proton d'un groupe hydroxyle produit.

2. Batterie comprenant :
une première électrode avec un premier matériau actif d'électrode pour réaliser une charge et une décharge par une adsorption et une désorption d'un proton du matériau actif d'électrode ;
une seconde électrode avec un second matériau actif d'électrode pour réaliser une charge et une décharge par une adsorption et une désorption d'un proton du second matériau actif d'électrode ;
un électrolyte entre la première et seconde électrode, l'électrolyte comprenant un matériau source de protons ; et
un séparateur perméable aux ions localisé à l'intérieur de l'électrolyte,
dans laquelle le premier matériau actif d'électrode et le second matériau actif d'électrode est soit un polymère π-conjugué comprenant un atome d'azote soit un composé quinone associé à un polymère π-conjugué comprenant un atome d'azote,
au moins une des électrodes est préchargée avant l'assemblage de la batterie à polymère à un potentiel différent du potentiel naturel des électrodes pour éviter les réactions irréversibles qui pourraient se produire sans cela pendant la charge de la batterie à polymère ; et
une charge et une décharge de la première et seconde électrodes sont apportées uniquement par une liaison et une élimination d'un proton sur l'atome d'azote ou d'un proton d'un groupe hydroxyle produit.

3. Batterie à polymère selon la revendication 1 ou 2 dans laquelle le polymère π-conjugué comprenant l'atome d'azote qui constitue les électrodes est un polymère ayant un groupe amino dans sa molécule.

4. Batterie à polymère selon la revendication 1 ou 2, dans laquelle le polymère π-conjugué comprenant l'atome d'azote qui constitue les électrodes est un polymère choisi dans le groupe constitué des polyanilines et de leurs dérivés représenté(e)s par la formule suivante dans laquelle R est indépendamment un atome d'hydrogène, un groupe alkyle, un groupe phényle, un groupe hydroxyle, un groupe alcoxy, un groupe nitro, un groupe sulfonique, un groupe amino, un atome d'halogène ou un groupe cyano.

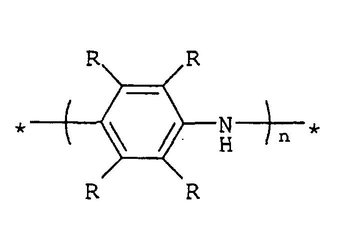

5. Batterie à polymère selon la revendication 4, dans laquelle le polymère π-conjugué comprenant l'atome d'azote qui constitue les électrodes est un polymère préparé par polymérisation chimique.

6. Batterie à polymère selon la revendication 1 ou 2, dans laquelle le polymère π-conjugué comprenant l'atome d'azote qui constitue les électrodes est un polymère ayant un atome d'azote dans son noyau aromatique.

7. Batterie à polymère selon la revendication 1 ou 2, dans laquelle le polymère π-conjugué comprenant l'atome d'azote qui constitue les électrodes est un polymère choisi dans le groupe constitué des polypyrroles, des polypyridines, des polypyrimidines et de leurs dérivés, chacun représenté par les formules suivantes dans lesquelles R est indépendamment un atome d'hydrogène, un groupe alkyle, un groupe phényle, un groupe hydroxyle, un groupe alcoxy, un groupe nitro, un groupe sulfonique, un groupe amino, un atome d'halogène ou un groupe cyano.

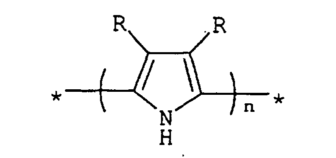

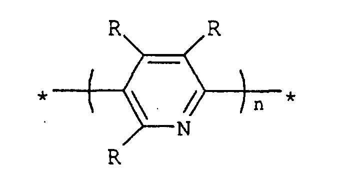

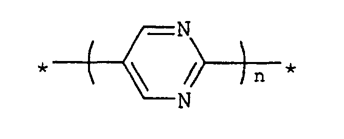

8. Batterie à polymère selon la revendication 1 ou 2, dans laquelle le composé quinone qui constitue les électrodes est une indanthrone ou un composé choisi dans le groupe constitué des anthraquinones, des naphthoquinones, des benzoquinones, et de leurs dérivés, chacun représenté par les formules suivantes dans lesquelles R est indépendamment un atome d'hydrogène, un groupe alkyle, un groupe phényle, un groupe hydroxyle, un groupe alcoxy, un groupe nitro, un groupe sulfonique, un groupe amino, un atome d'halogène ou un groupe cyano.

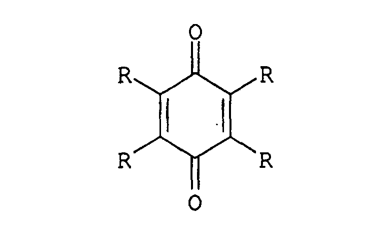

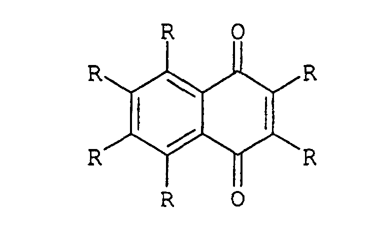

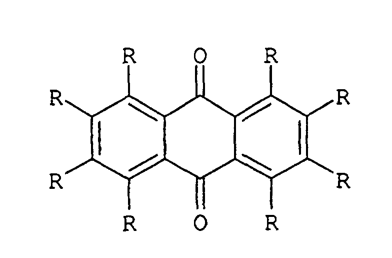

9. Procédé de charge et de décharge d'une batterie à polymère, telle que revendiquée dans l'une quelconque des revendications 1 à 8, qui comprend l'étape de contrôle de la tension de fonctionnement de façon à ce que la réception et la libération des électrons conformément à une réaction d'oxydo-réduction du matériau actif des électrodes positive et négative soient réalisées seulement par la liaison et l'élimination d'un proton lié ou coordonné à un atome d'azote ou le proton d'un groupe hydroxyle produit.

10. Procédé de fabrication d'une batterie à polymère ayant au moins une paire d'électrodes pour effectuer une réception et une libération d'électrons conformément à une réaction d'oxydo-réduction d'un composé pour en extraire une énergie électrique, et un électrolyte sous forme de liquide, de solide ou de gel, comprenant les étapes consistant à :
utiliser un polymère π-conjugué comprenant un atome d'azote ou un polymère π-conjugué comprenant un atome d'azote et un composé quinone, comme matériau actif d'un positif et d'un négatif constituant la paire d'électrodes ;
charger préalablement au moins une des électrodes avant l'assemblage de la batterie à polymère à un potentiel différent du potentiel naturel des électrodes pour éviter les réactions irréversibles qui pourrait se produire sans cela pendant la charge de la batterie à polymère ;
utiliser un matériau protonné comme électrolyte ; et
fixer une concentration en protons de l'électrolyte et contrôler la tension de fonctionnement pour réaliser la réception et la libération des électrons conformément à une réaction d'oxydo-réduction des matériaux actifs du positif et du négatif constituant les électrodes seulement par liaison et élimination d'un proton lié ou coordonné avec l'atome d'azote ou le proton d'un groupe hydroxyle produit.
